# FASCICULE DE BREVET EUROPEEN

(11) **EP 1 544 484 B1**
(45) Date de publication et mention de la délivrance du brevet: **01.05.2013**
(21) Numéro de dépôt: 04292990.1
(22) Date de dépôt: 14.12.2004
(51) Int. Cl.: F16C 1/06, F16C 1/26, B60N 2/44

(54) **Dispositif de transmission d'un mouvement de rotation comprenant une gaine format chemin sinueux pour un arbre flexible**
Vorrichtung zum Übertragen einer Drehbewegung durch eine flexible Welle mit einer wellenförmigen Hülle
A device for transmitting rotational movement comprising a flexible shaft having a sinuous sleeve

(30) Priorité: 17.12.2003 FR 0351098
(43) Date de publication de la demande: 22.06.2005
(73) Titulaire: Inderflex - Technoflex, 77820 Le Chatelet en Brie (FR)
(72) Inventeur: Tores, Denis, 77530 Vaux le Penil (FR)
(74) Mandataire: Enderlin, Eric André

(56) Documents cités:
- DE-U- 20 014 561
- DE-U- 20 216 127
- US-A- 3 837 364

## Description

L'invention concerne un dispositif de transmission d'un mouvement de rotation et un système de réglage pour siège de véhicule automobile comprenant un tel dispositif.

On connaît des dispositifs de transmission de rotation qui comprennent un arbre flexible et une gaine à l'intérieure de laquelle est logé l'arbre.

Dans ces dispositifs de transmission, notamment pour le réglage de siège pour véhicule automobile, les vitesses de rotation de l'arbre dans la gaine sont supérieures à 2000 tours/minute, classiquement de l'ordre de 3000 tours/minute.

Pour permettre une rotation à de telles vitesses, un jeu de quelques dixièmes de millimètre est nécessaire entre l'arbre et la gaine. Mais ce jeu entraîne, lors de la rotation, l'apparition de vibrations de faible amplitude qui se propagent le long de l'arbre et provoquent un bruit et une sensation au toucher désagréables.

Pour résoudre ce problème de vibrations, le document JP 07 310 730 propose un dispositif de transmission de rotation dont la gaine présente au moins une déformation sous la forme d'un étranglement, c'est à dire d'une réduction locale du diamètre de la gaine. Une gaine similaire de ce type est décrite dans le document DE-U-200 14 561. En effet, cet étranglement, en provoquant un contact serrant entre l'arbre et la gaine, permet de limiter les vibrations. Cependant, ce contact crée des frottements importants entre l'arbre et la gaine, ce qui oblige à augmenter le couple du moteur pour obtenir une vitesse de rotation de l'arbre suffisante pour l'application envisagée. De plus, ces frottements entraînent une usure prématurée de la gaine au niveau de la déformation.

L'invention vise à palier ces inconvénients en proposant un dispositif de transmission d'un mouvement de rotation dont la gaine présente des déformations permanentes qui sont agencées pour limiter les vibrations sans réduire le diamètre intérieur de la gaine.

A cet effet et selon un premier aspect, l'invention concerne un dispositif de transmission d'un mouvement de rotation comprenant un arbre flexible et une gaine à l'intérieure de laquelle l'arbre est logé, ladite gaine étant formée d'un corps creux en matière plastique dont le diamètre intérieur est agencé pour permettre la rotation dudit arbre à l'intérieur de ladite gaine, la paroi du corps présentant une épaisseur variable de sorte qu'une partie de la gaine présente une surface intérieure comprenant des ondulations s'étendant longitudinalement.

Selon un deuxième aspect, l'invention concerne un système de réglage pour siège de véhicule automobile, comprenant au moins une glissière de réglage montée sur la structure du véhicule et des moyens réglables de fixation du siège sur ladite glissière, ledit système comprenant en outre un moteur d'entraînement disposant d'au moins une partie tournante, ledit système de réglage comprenant en outre un dispositif de transmission tel que décrit ci-dessus, qui est disposé entre la sortie dudit moteur d'entraînement et lesdits moyens de fixation, de sorte à déplacer lesdits moyens de fixation le long de ladite glissière de réglage en réponse à une rotation de ladite sortie.

D'autres objets et avantages de l'invention apparaîtront au cours de la description qui suit, faite en référence aux dessins annexés.
La figure 1 est une vue en coupe longitudinale partielle de la gaine d'un dispositif de transmission selon l'invention, ladite gaine étant logée dans un tube du dispositif.
La figure 2 est une vue en coupe longitudinale partielle de la gaine de la figure 1 seule.
La figure 3 est une vue en coupe longitudinale partielle de la gaine selon un autre mode de réalisation, l'arbre étant logé dans la gaine.

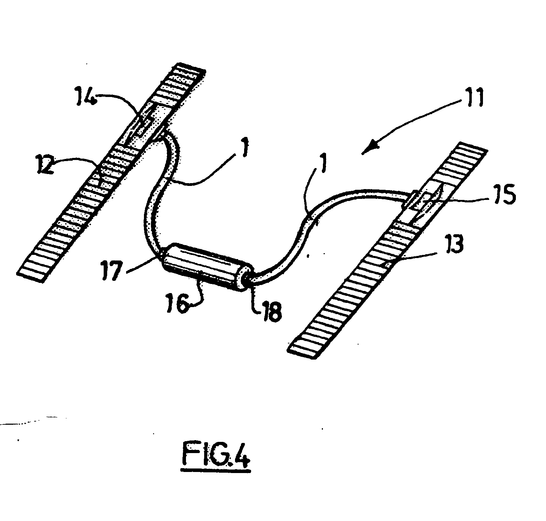

La figure 4 est une vue en perspective d'un système de réglage pour le siège de véhicule automobile selon l'invention.

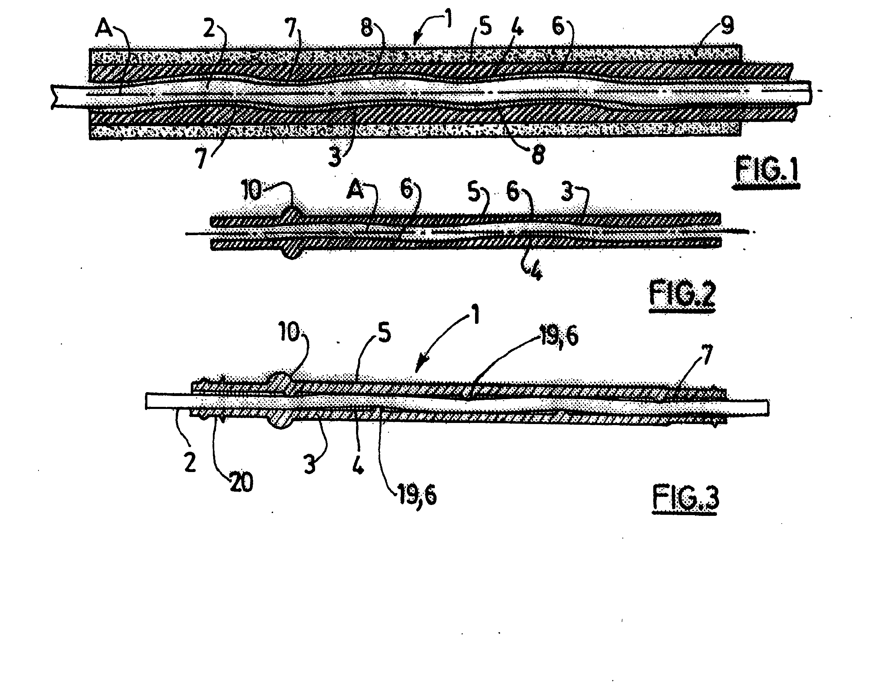

Comme représenté sur la figure 1, un dispositif de transmission d'un mouvement de rotation 1 comprend un arbre flexible 2 et une gaine 3. L'arbre 2 est logé dans la gaine 3 dont le diamètre intérieur est prévu pour permettre la rotation de l'arbre 2 dans la gaine 3.

Dans la description, on définit le terme « longitudinal » selon l'axe A de la gaine 3 représenté sur les figures 1 et 2.

Les vitesses de rotation de l'arbre 2 sont classiquement d'environ 3000 tours/minute. Pour permettre une rotation à cette vitesse, un jeu de quelques dixièmes de millimètre est prévu entre l'arbre 2 et la gaine 3.

La gaine 3 est réalisée en matériau plastique, par exemple du polyuréthanne. Elle peut être réalisée par moulage par injection de la matière plastique autour d'une broche.

La gaine 3 est formée d'un corps creux et présente une surface intérieure 4 et une surface extérieure 5. Par surface intérieure, on entend la surface formant la paroi du cylindre creux et se trouvant donc à l'intérieur de la gaine 3.

La paroi du corps creux présente une épaisseur variable de sorte que la surface intérieure 4 comprend des ondulations 6 s'étendant longitudinalement sur au moins une partie de la gaine 3. Ceci crée un cheminement légèrement sinueux à l'intérieur de la gaine 3 avec des points de contact 7 entre la gaine 3 et l'arbre 2 qui sont opposés par rapport à l'axe A de la gaine et alternés de part et d'autre de cet axe, comme représenté sur la figure 1. Ces points de contact 7 éliminent toute possibilité de mise en vibration de l'arbre 2 en mouvement sans pour autant freiner celui-ci. Le couple du moteur peut ainsi être analogue à celui utilisé avec des gaines non déformées et la gaine 3 ne présente pas une tendance à l'usure prématurée au niveau des déformations. D'autre part, les espaces laissés libres entre la gaine 3 et l'arbre flexible 2 peuvent former réserve de graisse 8 pour la lubrification de l'arbre 2.

Selon une réalisation représentée sur la figure 3, les ondulations 6 sont formées par des saillies 19 s'étendant vers l'intérieur de la gaine 3 et réparties le long d'au moins une partie de la gaine 3. Comme représentée sur la figure 3, les saillies 19 permettent de créer un cheminement légèrement sinueux à l'intérieur de la gaine. Les saillies 19 peuvent présenter une section de forme quelconque, notamment choisie parmi un triangle, une partie de cercle, une partie de losange, une partie de rectangle.

Les ondulations 6 sont formées lors du moulage de la gaine en prévoyant que la broche, autour de laquelle le moulage est réalisé, soit ondulée de manière appropriée.

Selon une réalisation, les ondulations 6 sont prévues dans les parties extrêmes de la gaine 3, le reste de la gaine présentant une surface intérieure sensiblement cylindrique comme dans le cas d'une gaine non déformée.

Selon une autre réalisation, particulièrement pour des gaines de faible longueur, par exemple une longueur comprise entre 5 et 10 cm, toute la surface intérieure 4 présente des ondulations 6 qui s'étendent le long de l'intégralité de la gaine.

Les ondulations 6 peuvent être continues ou discontinues.

Selon la réalisation représentée sur les figures 1 et 2, la surface extérieure 5 de la gaine est sensiblement cylindrique. La gaine présente alors une surface extérieure lisse. Cette réalisation est particulièrement adaptée lorsque la gaine 3 passe à l'intérieur d'un tube 9 de guidage de la gaine du dispositif de transmission 1, comme cela est représenté sur la figure 1.

En effet, dans certaines applications, on prévoit que la gaine 3 passe à l'intérieur d'un tube de guidage 9 rigide dont le diamètre intérieur est sensiblement égal au diamètre extérieur de la gaine 3. Si la surface extérieure de la gaine 5 est également déformée, il peut se produire que le tube 9 « écrase » les déformations et empêche la formation du chemin sinueux à l'intérieur de la gaine 3, c'est pourquoi on peut prévoir une surface extérieure 5 sensiblement cylindrique.

Selon une réalisation, seule une ou les deux parties extrêmes de la gaine 3 sont logées dans le tube 9. On peut alors prévoir que la gaine comprenne au moins une zone formant butée 10, comme représenté sur la figure 2. Cette zone 10 s'étend en saillie depuis la surface extérieure 5. Lorsque la partie extrême est insérée dans le tube, une partie extrême du tube 9 vient en contact avec la zone formant butée 10 de sorte à limiter la longueur de gaine introduite dans le tube.

Les ondulations 6 étant réalisées à l'intérieur de la gaine 3, la surface extérieure 5 peut être adaptée pour permettre la fixation de la gaine 3 sur un support par l'intermédiaire de moyens de fixation. Ainsi, la surface extérieure 5 de la gaine 3 peut présenter des variations d'épaisseur de sorte à former des zones d'association 20 à des moyens de fixation externes de la gaine 3 sur un support, comme représenté sur la figure 3. Les moyens de fixation sont par exemple des clips, des raccords, etc.

L'arbre flexible 2 peut présenter une circonférence usinée de sorte à rendre celle-ci sensiblement lisse. De la sorte, on assure une rotation à frottement réduit de l'arbre 2 dans la gaine 3. L'arbre flexible 2 peut par exemple être conforme à la réalisation décrite dans le document FR-03 03034.

Selon une réalisation, l'arbre 2 comprend au moins une partie extrême destinée à être logée dans un logement sur une longueur maximale s'étendant entre la base et l'extrémité libre de la partie extrême, ladite partie extrême ayant une géométrie de tronc de pyramide vrillé s'étendant entre la base et l'extrémité libre. L'arbre est par exemple conforme à la réalisation décrite dans le document FR-03 51001.

La partie extrême de l'arbre 2 a donc une section qui diminue jusqu'à son extrémité libre. Ceci permet d'assurer une association avec le logement précise et sans jeu en insérant la partie extrême de l'arbre dans le logement jusqu'à ce que la section de l'arbre soit en contact contre les parois internes du logement.

La partie extrême étant vrillée, on assure un blocage de l'arbre 2 dans le logement lorsque celui-ci est mis en rotation par interférence des arêtes du tronc de pyramide avec les parois du logement. De plus, une telle section variable permet à un arbre 2 d'être adapté à différentes dimensions de logement.

En référence à la figure 3, on décrit maintenant un système de réglage pour siège de véhicule automobile 11 comprenant un dispositif de transmission d'un mouvement de rotation 1 tel que décrit ci-dessus.

Un tel système de réglage 11 comprend deux glissières 12 et 13 fixées par tout moyens convenables sur la structure non représentée d'un véhicule automobile. Ces glissières présentent des crans de réglage dont la fonction sera décrite ci-après.

Les glissières 12 et 13 supportent l'armature d'un siège, également non représentée, du véhicule, dont le déplacement et la fixation par rapport aux glissières sont assurés par des moyens réglables tels que des réducteurs 14 et 15 respectivement munis de roues dentées coopérant avec les crans précités des glissières 12 et 13.

Un moteur électrique 16 est fixé à la structure du véhicule ou, en variante, à l'armature du siège. Ce moteur 16 possède deux sorties tournantes 17 et 18. Ces sorties 17 et 18 sont reliées par des dispositifs de transmission d'un mouvement de rotation 1 selon l'invention aux réducteurs 14 et 15 respectivement.

Les dispositifs de transmission 1 sont associés aux sorties du moteur et aux réducteurs par l'intermédiaire de logements qui reçoivent les parties extrêmes des arbres flexibles 2. L'association entre une partie extrême et un logement est réalisée en enfonçant la partie extrême jusqu'à ce que la section de cette partie soit en contact avec les parois internes du logement. Il n'existe alors pas de jeu entre l'arbre flexible 2 et le logement ce qui permet d'assurer une transmission efficace des mouvements de rotation et réduit les bruits créés par le système 11.

## Revendications

1. Dispositif de transmission d'un mouvement de rotation comprenant un arbre flexible (2) et une gaine (3) à l'intérieur de laquelle l'arbre (2) est logé, ladite gaine étant formée d'un corps creux en matériau plastique dont le diamètre intérieur est agencé pour permettre la rotation dudit arbre à l'intérieur de ladite gaine, ledit dispositif étant **caractérisé en ce que** la paroi du corps présente une épaisseur variable de sorte qu'au moins une partie de la gaine présente une surface intérieure (4) comprenant des ondulations (6) s'étendant longitudinalement.

2. Dispositif de transmission selon la revendication 1, **caractérisé en ce que** les ondulations (6) sont formées par des saillies (19) s'étendant vers l'intérieur de la gaine (3) et réparties le long d'au moins une partie de la gaine (3).

3. Dispositif de transmission selon la revendication 2, **caractérisé en ce que** les saillies (19) présentent une section de forme choisie parmi un triangle, une partie de cercle, une partie de losange, une partie de rectangle.

4. Dispositif de transmission selon l'une quelconque des revendications 1 à 3, **caractérisé en ce qu'**au moins une partie de la gaine (3) présente une surface extérieure (5) sensiblement cylindrique.

5. Dispositif de transmission selon l'une quelconque des revendications 1 à 4, **caractérisé en ce qu'**une ou les deux parties extrêmes de la gaine (3) présentent une surface intérieure (4) comprenant des ondulations (6) s'étendant longitudinalement.

6. Dispositif de transmission selon l'une quelconque des revendications 1 à 5, **caractérisé en ce que** la totalité de la gaine (3) présente une surface intérieure (4) comprenant des ondulations (6) s'étendant longitudinalement.

7. Dispositif de transmission selon l'une quelconque des revendications 1 à 6, **caractérisé en ce qu'**il comprend un tube rigide (9) dont le diamètre intérieur est sensiblement égal au diamètre extérieur de la gaine (3), au moins la partie extrême étant logée dans ledit tube.

8. Dispositif de transmission selon l'une quelconque des revendications 1 à 7, **caractérisé en ce que** la gaine (3) comprend une zone formant butée (10), ladite zone s'étendant en saille depuis la surface extérieure (5).

9. Dispositif de transmission selon la revendication 8 lorsqu'elle dépend de la revendication 7, **caractérisé en ce qu'**une partie extrême du tube (9) vient en contact avec la zone formant butée (10).

10. Dispositif de transmission selon l'une quelconque des revendications 1 à 9, **caractérisé en ce que** la surface extérieure (5) de la gaine (3) présente des variations d'épaisseur de sorte à former des zones d'association (20) à des moyens de fixation externes de la gaine (3) sur un support.

11. Dispositif de transmission selon l'une quelconque des revendications 1 à 10, **caractérisé en ce que** l'arbre (2) comprend au moins une partie extrême ayant une géométrie de tronc de pyramide vrillé.

12. Dispositif de transmission selon l'une quelconque des revendications 1 à 11, **caractérisé en ce que** l'arbre flexible (2) est usiné de sorte à présenter une surface extérieure sensiblement lisse.

13. Système de réglage pour siège de véhicule automobile, comprenant au moins une glissière de réglage (12, 13) montée sur la structure du véhicule et des moyens réglables de fixation (14, 15) du siège sur ladite glissière, ledit système comprenant en outre un moteur d'entraînement (16) disposant d'au moins une partie tournante, ledit système de réglage étant **caractérisé en ce qu'**il comprend en outre un dispositif de transmission (1) selon l'une quelconque des revendications 1 à 12, qui est disposé entre la sortie (17, 18) dudit moteur d'entraînement et lesdits moyens de fixation, de sorte à déplacer lesdits moyens de fixation le long de ladite glissière de réglage en réponse à une rotation de ladite sortie.

## Claims

1. Device for transmitting rotational movement comprising a flexible shaft (2) and a sheath (3) within which the shaft (2) is housed, said sheath being formed from a hollow body made of plastic, the internal diameter of which is designed to allow said shaft to rotate inside said sheath, said device being **characterized in that** the wall of the body has a variable thickness so that at least part of the sheath has an inner surface (4) having undulations (6) which extend in the longitudinal direction.

2. Transmitting device according to Claim 1, **characterized in that** the undulations (6) are formed by projections (19) which extend towards the interior of the sheath (3) and are distributed along at least part of the sheath (3).

3. Transmitting device according to Claim 2, **characterized in that** the shape of the cross section of the projections (19) is chosen from a triangle, part of a circle, part of a rhombus, part of a rectangle.

4. Transmitting device according to any one of Claims 1 to 3, **characterized in that** at least part of the sheath (3) has a substantially cylindrical outer surface (5).

5. Transmitting device according to any one of Claims 1 to 4, **characterized in that** one or both end parts of the sheath (3) has/have an inner surface (4) having undulations (6) which extend in the longitudinal direction.

6. Transmitting device according to any one of Claims 1 to 5, **characterized in that** the whole sheath (3) has an inner surface (4) having undulations (6) which extend in the longitudinal direction.

7. Transmitting device according to any one of Claims 1 to 6, **characterized in that** it comprises a rigid tube (9) the inner diameter of which is substantially equal to the outer diameter of the sheath (3), with at least the end part being housed in said tube.

8. Transmitting device according to any one of Claims 1 to 7, **characterized in that** the sheath (3) has an area which acts as a stop (10), said area projecting from the outer surface (5).

9. Transmitting device according to Claim 8 where it refers to Claim 7, **characterized in that** one end part of the tube (9) comes into contact with the area which acts as a stop (10).

10. Transmitting device according to any one of Claims 1 to 9, **characterized in that** the thickness of the outer surface (5) of the sheath (3) varies so as to form areas of association (20) with external means for fastening the sheath (3) to a support.

11. Transmitting device according to any one of Claims 1 to 10, **characterized in that** the shaft (2) has at least one end part in the shape of a twisted truncated pyramid.

12. Transmitting device according to any one of Claims 1 to 11, **characterized in that** the flexible shaft (2) is machined in order to have a substantially smooth outer surface.

13. System for adjusting a seat of a motor vehicle, comprising at least one adjusting rail (12, 13) mounted on the structure of the vehicle and adjustable means (14, 15) for fastening the seat on said rail, said system further comprising a drive motor (16) having at least one rotating part, said adjusting system being **characterized in that** it further comprises a transmitting device (1) according to any one of Claims 1 to 12 which is arranged between the output (17, 18) of said drive motor and said fastening means, so as to move said fastening means along said adjusting rail in response to a rotation of said output.

## Patentansprüche

1. Vorrichtung zur Übertragung einer Drehbewegung, die eine elastische Welle (2) und eine Hülle (3) enthält, in deren Innerem die Welle (2) untergebracht ist, wobei die Hülle aus einem Hohlkörper aus Kunststoff geformt ist, dessen Innendurchmesser ausgelegt ist, um die Drehung der Welle im Inneren der Hülle zu erlauben, wobei die Vorrichtung **dadurch gekennzeichnet ist, dass** die Wand des Körpers eine variable Dicke aufweist, so dass mindestens ein Teil der Hülle eine Innenfläche (4) aufweist, die in Längsrichtung verlaufende Wellenformen (6) enthält.

2. Übertragungsvorrichtung nach Anspruch 1, **dadurch gekennzeichnet, dass** die Wellenformen (6) von Vorsprüngen (19) geformt werden, die sich zum Inneren der Hülle (3) erstrecken und entlang mindestens eines Teils der Hülle (3) verteilt sind.

3. Übertragungsvorrichtung nach Anspruch 2, **dadurch gekennzeichnet, dass** die Vorsprünge (19) einen Querschnitt aufweisen, dessen Form ausgewählt wird unter einem Dreieck, einem Kreisabschnitt, einem Rautenabschnitt, einem Rechteckabschnitt.

4. Übertragungsvorrichtung nach einem der Ansprüche 1 bis 3, **dadurch gekennzeichnet, dass** mindestens ein Teil der Hülle (3) eine im Wesentlichen zylindrische Außenfläche (5) aufweist.

5. Übertragungsvorrichtung nach einem der Ansprüche 1 bis 4, **dadurch gekennzeichnet, dass** einer oder beide der Endabschnitte der Hülle (3) eine Innenfläche (4) aufweisen, die in Längsrichtung verlaufende Wellenformen (6) enthält.

6. Übertragungsvorrichtung nach einem der Ansprüche 1 bis 5, **dadurch gekennzeichnet, dass** die Gesamtheit der Hülle (3) eine Innenfläche (4) aufweist, die in Längsrichtung verlaufende Wellenformen (6) enthält.

7. Übertragungsvorrichtung nach einem der Ansprüche 1 bis 6, **dadurch gekennzeichnet, dass** sie ein steifes Rohr (9) enthält, dessen Innendurchmesser im Wesentlichen gleich dem Außendurchmesser der Hülle (3) ist, wobei mindestens der Endabschnitt im Rohr untergebracht ist.

8. Übertragungsvorrichtung nach einem der Ansprüche 1 bis 7, **dadurch gekennzeichnet, dass** die Hülle (3) eine einen Anschlag (10) formende Zone enthält, wobei die Zone sich von der Außenfläche (5) vorstehend erstreckt.

9. Übertragungsvorrichtung nach Anspruch 8, wenn er von Anspruch 7 abhängt, **dadurch gekennzeichnet, dass** ein Endabschnitt des Rohrs (9) mit der einen Anschlag (10) formenden Zone in Kontakt kommt.

10. Übertragungsvorrichtung nach einem der Ansprüche 1 bis 9, **dadurch gekennzeichnet, dass** die Außenfläche (5) der Hülle (3) Dickenveränderungen aufweist, um Verbindungszonen (20) mit externen Befestigungseinrichtungen der Hülle (3) an einem Träger zu formen.

11. Übertragungsvorrichtung nach einem der Ansprüche 1 bis 10, **dadurch gekennzeichnet, dass** die Welle (2) mindestens einen Endabschnitt enthält, der eine Geometrie eines verwundenen Pyramidenstumpfs hat.

12. Übertragungsvorrichtung nach einem der Ansprüche 1 bis 11, **dadurch gekennzeichnet, dass** die elastische Welle (2) so bearbeitet ist, dass sie eine im Wesentlichen glatte Außenfläche aufweist.

13. Einstellsystem für einen Kraftfahrzeugsitz, das mindestens eine Einstellschiene (12, 13), die auf den Aufbau des Fahrzeugs montiert ist, und einstellbare Befestigungseinrichtungen (14, 15) des Sitzes an der Schiene enthält, wobei das System außerdem einen Antriebsmotor (16) enthält, der über mindestens einen drehenden Teil verfügt, wobei das Einstellsystem **dadurch gekennzeichnet ist, dass** es außerdem eine Übertragungsvorrichtung (1) nach einem der Ansprüche 1 bis 12 enthält, die zwischen dem Ausgang (17, 18) des Antriebsmotors und den Befestigungseinrichtungen angeordnet ist, um die Befestigungseinrichtungen als Reaktion auf eine Drehung des Ausgangs entlang der Einstellschiene zu verschieben.
